# EUROPEAN PATENT APPLICATION

(11) **EP 4 664 727 A1**
(43) Date of publication of application: **17.12.2025**
(21) Application number: 25179665.2
(22) Date of filing: 29.05.2025
(51) Int. Cl.: H02K 3/12

(54) **AXIAL FLUX MOTOR STATOR STRUCTURE**

(30) Priority: 14.06.2024 US 202463659843 P; 27.11.2024 CN 202411717801
(71) Applicant: Delta Electronics, Inc., Taoyuan City 333 (TW)
(72) Inventor: CHEN, Yi-No, Taoyuan City 333 (TW); HSU, Tzu-Ting, Taoyuan City 333 (TW)
(74) Representative: Riccardi, Elisa

(57) **Abstract**

An axial flux motor stator structure includes a soft magnetic material body and multiple conductor wires. The soft magnetic material body has multiple slots. The conductor wires pass through the slots to form windings. Each of the conductor wires includes multiple inner protrusions located in an internal space of the soft magnetic material body surrounding an axis. Each inner protrusion includes a central bending section (123c) and at least two consecutive bending sections (123R1, 123R2, 123F1, 123F2). The central bending section and the at least two consecutive bending sections are bent in opposite directions. The at least two consecutive bending sections include a first bending section with a first curvature radius (R1) and a second bending section with a second curvature radius (R2). The second bending section (123R2, 123F2) is farther from the central bending section than the first bending section (123R1, 123F1), and the second curvature radius (R2) is greater than the first curvature radius (R1).

## Description

### BACKGROUND

### Field of Disclosure

The present disclosure relates to a motor, and more particularly to an axial flux motor stator structure.

### Description of Related Art

Motors are components configured to convert electrical energy into mechanical energy and have been widely used in daily life. The conductor wires of the current axial flux motor structure are arranged in the slots of the stator according to the corresponding magnetic poles. In order to make the conductor wire arrangement effectively filling the space in the stator slots, the two conductor wires in adjacent slots must be swapped up and down at the protruding portions while being routed to the next position of the magnetic poles. That is, an up and down staggered arrangement should be utilized. In this way, multiple conductors need to be bent in parallel at the same time, resulting in insufficient geometric restraint on the protruding portion of the conductor wires from the soft magnetic material body during the bending process, and the bent portion presents a shape with a less efficient spatial arrangement, which makes the stator with a minimum inner diameter is limited by the interference between the conductors, making it impossible to optimize the volume power density.

### SUMMARY

The present disclosure provides an axial flux motor stator structure to deal with the needs of the prior art problems.

In one or more embodiments, an axial flux motor stator structure includes a soft magnetic material body having a plurality of slots; and a plurality of conductor wires routed through the slots to form a plurality of windings, wherein each conductor wire includes a plurality of inner diameter protrusions located in an internal space of the soft magnetic material body surrounding an axis, and each inner diameter protrusion includes a central bending section and at least two consecutive bending sections, wherein the central bending section and the at least two consecutive bending sections are bent in opposite directions, and the at least two consecutive bending sections include a first bending section having a first curvature radius and a second bending section having a second curvature radius, and wherein the second bending section is farther away from the central bending section than the first bending section, and the second curvature radius is greater than the first curvature radius.

In one or more embodiments, the second curvature radius and the first curvature radius are both greater than or equal to 1.5 times of a width of each conductor wire.

In one or more embodiments, each conductor wire further comprises a plurality of receiving portions and a plurality of outer diameter protrusions, wherein the receiving portions are located in the slots, and the outer diameter protrusions are exposed outside an outer diameter sidewall of the soft magnetic material body.

In one or more embodiments, each inner diameter protrusion includes two combinations of the first bending section and the second bending section, and the two combinations are symmetrically arranged relative to the central bending section which has a symmetry axis passing through a central bending point of the central bending section in a stator radius direction.

In one or more embodiments, each inner diameter protrusion further includes two side bending sections, and the two combinations and the two side bending sections are symmetrically arranged relative to the symmetry axis in the stator radius direction.

In one or more embodiments, the inner diameter protrusion further includes a third bending section with a third curvature radius, the third bending section is farther away from the central bending section than the second bending section, and the third curvature radius is greater than the second curvature radius.

In one or more embodiments, the first curvature radius, the second curvature radius and third curvature radius are all greater than or equal to 1.5 times of a width of each conductor wire.

In one or more embodiments, each inner diameter protrusion includes two combinations of the first bending section, the second bending section and the third bending section, and the two combinations are symmetrically arranged relative to the central bending section which has a symmetry axis passing through a central bending point of the central bending section in a stator radius direction.

In one or more embodiments, each inner diameter protrusion further includes a side bending section, the side bending section and the first bending section, the second bending section and the third bending section are bent in opposite directions, and the first bending section, the second bending section and the third bending section are connected between the central bending section and the side bending section.

In one or more embodiments, each inner diameter protrusion further includes a side bending section, the side bending section and the first and second bending sections are bent in opposite directions, and the first bending section and second bending section are connected between the central bending section and the side bending section.

In sum, the axial flux motor stator structure disclosed herein adopts a conductor wire with an optimized shape before assembly, and the shape optimization of the inner diameter protrusion of the conductor wire is completed in the design stage as early as possible to optimize the inner diameter protrusion of the conductor wire, which can reduce unnecessary gaps between adjacent conductor wires, retain the intersection gap, and improve insulation reliability. The inner diameter protrusion of the conductor wire can reduce an inner diameter of the soft magnetic material body by means of retaining the intersection gap, thereby increasing the stator magnetic field action area, or increasing a width of the conductor wire to improve the winding output power.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 illustrates a perspective view of a soft magnetic material body of an axial flux motor stator structure according to an embodiment of the present disclosure;
Fig. 2 illustrates a schematic diagram showing a relationship between a single conductor wire and a soft magnetic material body according to an embodiment of the present disclosure;
Fig. 3 illustrates a top view showing the relationship between the conductor wire array and the soft magnetic material body according to an embodiment of the present disclosure;
Fig. 4 illustrates an enlarged view of a portion of a single conductor wire in Fig. 3;
Fig. 5 illustrates a top view showing the relationship between a conductor wire array and the soft magnetic material body according to another embodiment of the present disclosure; and
FIG. 6 illustrates an enlarged view of a portion of a single conductor wire in Fig. 5.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

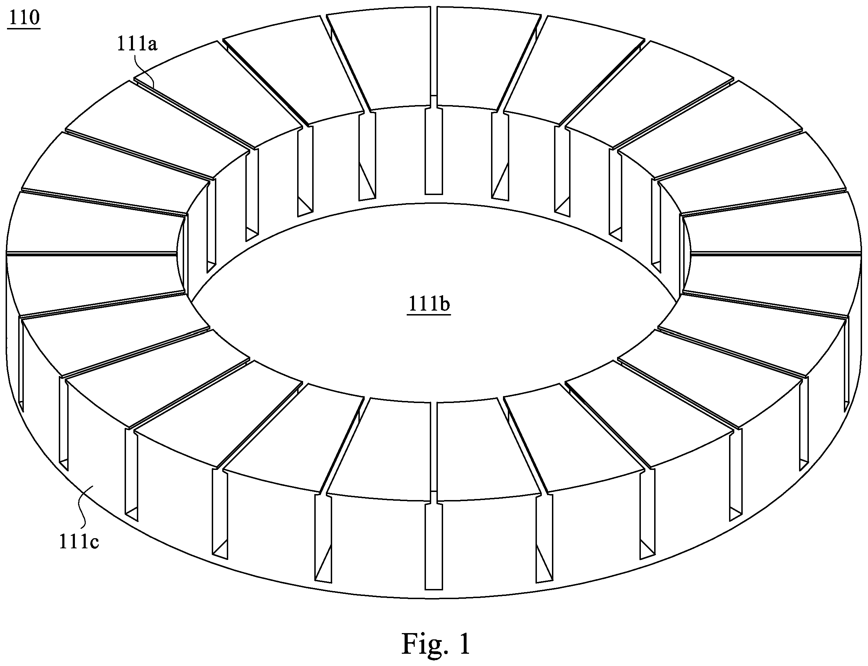

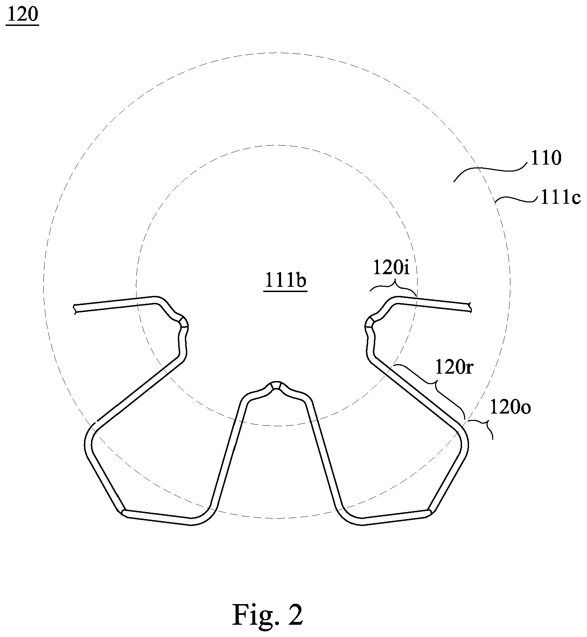

Reference is made to Figs. 1 and 2, the soft magnetic material body 110 has a plurality of slots 111a. In some embodiments of the present disclosure, the soft magnetic material body 110 includes 24 slots 111a through which a plurality of conductor wires 120 are routed to form a plurality of windings, but the number of slots is not limited thereto. In some embodiments of the present disclosure, each conductor wire 120 includes a plurality of receiving portions 120r, a plurality of inner diameter protrusions 120i, and a plurality of outer diameter protrusions 120o. The soft magnetic material body 110 is a hollow annular structure having a width and defined by an inner diameter and an outer diameter. The inner diameter protrusions 120i are located in an internal space 111b surrounding an axis of the soft magnetic material body 110, and the outer diameter protrusions 120o protrude and are exposed outside the outer diameter sidewall 111c of the soft magnetic material body 110. The receiving portions 120r are connected between the inner diameter protrusions 120i and the outer diameter protrusions 120o, and are received in slots 111a of the soft magnetic material body 110 after assembly. In some embodiments of the present disclosure, the soft magnetic material body 110 is formed by stacking a plurality of silicon steel sheets. In some embodiments of the present disclosure, the soft magnetic material body 110 is composed of a soft magnetic composite (SMC).

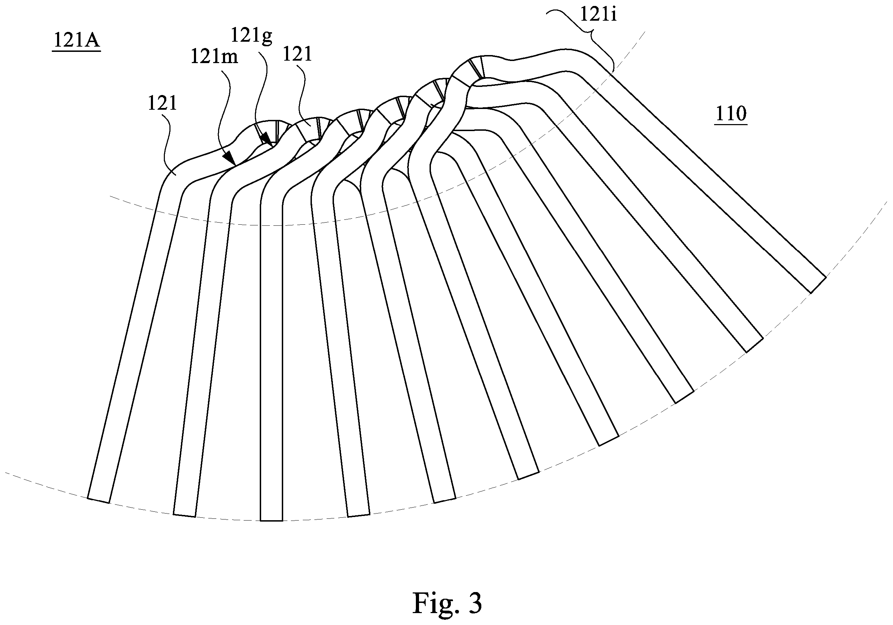

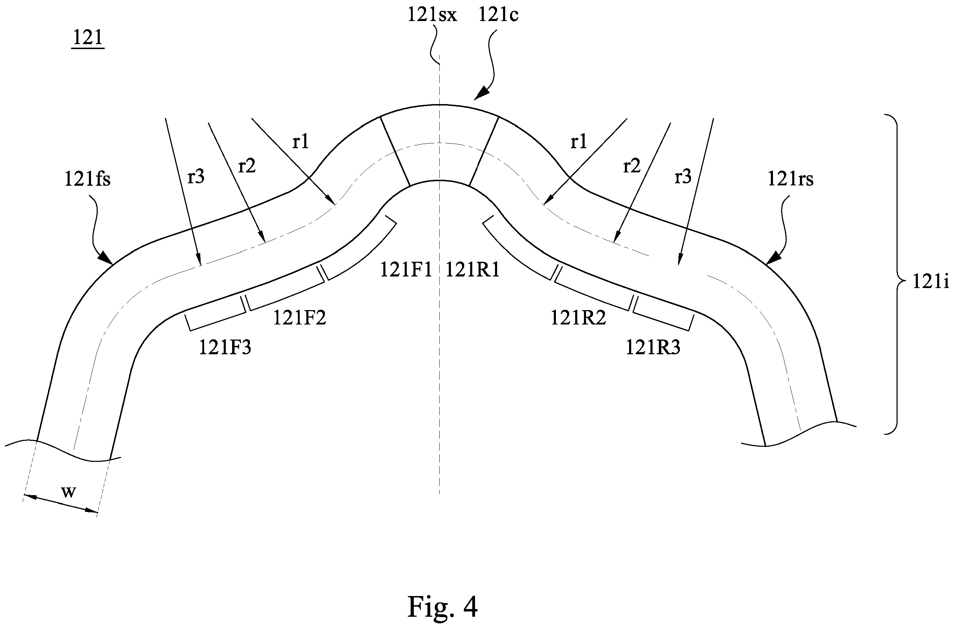

Reference is made to Figs. 3 and 4, a conductor wire array 121A includes a plurality of conductor wires 121, and the inner diameter protrusions 121i of the conductor wires 121 are staggered in the internal space 111b of the soft magnetic material body 110. In some embodiments of the present disclosure, in order to reduce unnecessary gaps between adjacent conductor wires 121 (i.e., the smaller the gap 121m, the better) and retain the intersection gap (i.e., the gap 121g is greater than a predetermined value), an arrangement of the conductor wires 121 need to be optimized to improve an insulation reliability of the conductor wire array 121A. In some embodiments of the present disclosure, the inner diameter protrusion 121i of the small-span conductor wire 121 includes at least a central bending section 121c and three consecutive bending sections, e.g., three consecutive bending sections (121F1, 121F2, 121F3) or three consecutive bending sections (121R1, 121R2, 121R3), the central bending section 121c and the three consecutive bending sections are bent in opposite directions. For example, the central bending section 121c is bent toward the outer diameter direction, and the three continuous bent sections are bent toward the inner diameter direction, but the present disclosure is not limited thereto. The three consecutive bending sections include a first bending section (121F1 or 121R1) with a first curvature radius r1, a second bending section (121F2 or 121R2) with a second curvature radius r2. The first bending section (121F1 or 121R1) is farther away from the central bending section 121c than the second bending section (121F2 or 121R2), and the second curvature radius r2 is greater than the first curvature radius r1. The third bending section (121F3 or 121R3) has a third curvature radius r3 and is farther from the central bending section 121c than the second bending section (121F2 or 121R2), and the third curvature radius r3 is greater than the second curvature radius r2.

In some embodiments of the present disclosure, the three consecutive bending sections (121F1, 121F2, 121F3) and the three consecutive bending sections (121R1, 121R2, 121R3) are symmetrically arranged relative to the central bending section 121c which has a symmetry axis 121sx passing through a central bending point of the central bending section 121c in a stator radius direction. In other words, the two first bending sections (121F1 and 121R1) are symmetrically arranged relative to the symmetry axis 121sx in the stator radius direction, and the two second bending sections (121F2 and 121R2) are symmetrically arranged relative to the symmetry axis 121sx in the stator radius direction, and the two third bending sections (121F3 and 121R3) are symmetrically arranged relative to the symmetry axis 121sx in the stator radius direction.

In some embodiments of the present disclosure, in order to make the conductor wire array 121A reliable enough to meet the requirements of high temperature and high voltage use, the first curvature radius r1, the second curvature radius r2 and the third curvature radius r3 are all greater than or equal to 1.5 times of a width w of each conductor wire 121.

In some embodiments of the present disclosure, the inner diameter protrusion 121i of the conductor wire 121 includes a side bending section (121rs or 121fs), the side bending section (121rs or 121fs) and three consecutive bending sections are bent in opposite directions. That is, the side bending section (121rs or 121fs) is bent in the same direction as the central bending section 121c. And the three consecutive bending sections are connected between the central bending section 121c and the side bending sections (121rs or 121fs), e.g., three consecutive bending sections (121F1, 121F2, 121F3) are connected between the central bending section 121c and the side bending section 121fs, and three consecutive bending sections (121R1, 121R2, 121R3) are connected between the central bending section 121c and the side bending section 121rs.

In some embodiments of the present disclosure, the two side bending sections (121rs, 121fs) are symmetrically arranged relative to the central bending section 121c which has a symmetry axis 121sx passing through a central bending point of the central bending section 121c in a stator radius direction.

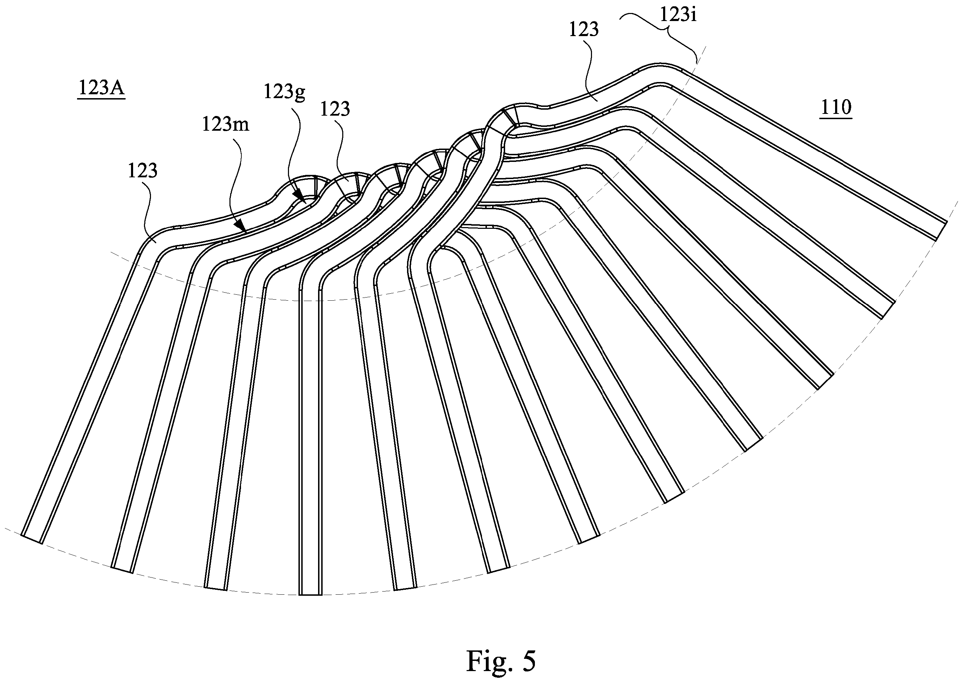

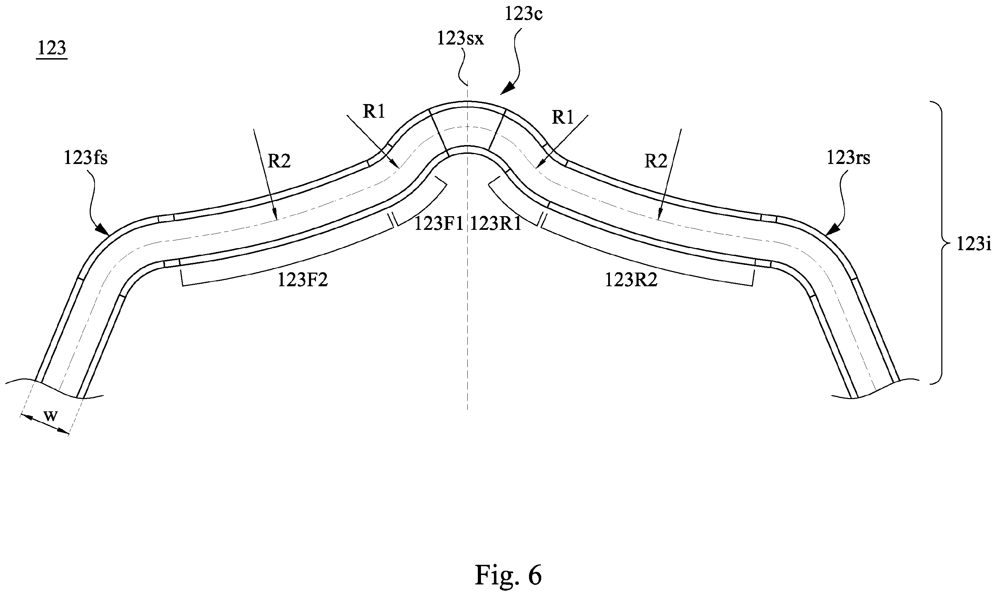

Reference is made to Figs. 5 and 6. A conductor wire array 123A includes a plurality of conductor wires 123, and the inner diameter protrusions 123i of the conductor wires 123 are staggered in the internal space 111b of the soft magnetic material body 110 surrounding the axis. In some embodiments of the present disclosure, in order to reduce unnecessary gaps between adjacent conductor wires 123 (i.e., the smaller the gap 123m, the better) and retain the intersection gap (i.e., the gap 123g is greater than a predetermined value), an arrangement of the conductor wires 123 need to be optimized to improve the insulation reliability of the conductor wire array 123A. In some embodiments of the present disclosure, the inner diameter protrusion 123i of the large-span conductor wire 123 includes a central bending section 123c and two consecutive bending sections, such as two consecutive bending sections (123F1, 123F2) or two consecutive bending sections (123R1, 123R2). The central bending section 123c and the two consecutive bending sections are bent in opposite directions. For example, the central bending section 123c is bent toward the outer diameter direction, and the two consecutive bending sections are bent toward the inner diameter direction, but the present disclosure is not limited thereto. The two consecutive bending sections include a first bending section (123F1 or 123R1) with a first curvature radius R1, and a second bending section (123F2 or 123R2) with a second curvature radius R2. The second bending section (123F2 or 123R2) is farther from the central bending section 123c than the first bending section (123F1 or 123R1), and the second curvature radius R2 is greater than the first curvature radius R1.

In some embodiments of the present disclosure, the two consecutive bending sections (123F1, 123F2) and the two consecutive bending sections (123R1, 123R2) are symmetrically arranged relative to the central bending section 123c which has a symmetry axis 123sx passing through a central bending point of the central bending section 123c in a stator radius direction. In other words, the two first bending sections (123F1 and 123R1) are symmetrically arranged relative to the symmetry axis 123sx in the stator radius direction, and the two second bending sections (123F2 and 123R2) are symmetrically arranged relative to the symmetry axis 123sx in the stator radius direction.

In some embodiments of the present disclosure, in order to make the conductor wire array 123A reliable enough to meet the requirements of high temperature and high voltage use, the first curvature radius R1 and the second curvature radius R2 are both greater than or equal to 1.5 times of a width w of the conductor wire 123.

In some embodiments of the present disclosure, the inner diameter protrusion 123i of the conductor wire 123 includes a side bending section (123rs or 123fs), the side bending section (123rs or 123fs) and two consecutive bending sections are bent in opposite directions. In other words, the side bending sections (123rs or 123fs) are bent in the same direction as the central bending section 123c. Two consecutive bending sections are connected between the central bending section 123c and the side bending section (123rs or 123fs). For example, the two consecutive bending sections (123F1, 123F2) are connected between the central bending section 123c and the side bending section 123fs. The two consecutive bending sections (123R1, 123R2) are connected between the central bending section 123c and the side bending section 123rs.

In some embodiments of the present disclosure, the two side bending sections (123rs, 123fs) are symmetrically arranged relative to the central bending section 123c which has a symmetry axis 123sx passing through a central bending point of the central bending section 123c in a stator radius direction.

In sum, the axial flux motor stator structure disclosed herein adopts a conductor wire with an optimized shape before assembly, and the shape optimization of the inner diameter protrusion of the conductor wire is completed in the design stage as early as possible to optimize the inner diameter protrusion of the conductor wire, which can reduce unnecessary gaps between adjacent conductor wires, retain the intersection gap, and improve insulation reliability. The inner diameter protrusion of the conductor wire can reduce an inner diameter of the soft magnetic material body by means of retaining the intersection gap, thereby increasing the stator magnetic field action area, or increasing a width of the conductor wire to improve the winding output power.

## Claims

1. An axial flux motor stator structure comprising:
a soft magnetic material body(110) having a plurality of slots(111a); and
a plurality of conductor wires(120) routed through the slots(111a) to form a plurality of windings,
wherein each conductor wire(120,121,123) includes a plurality of inner diameter protrusions(120i,121i,123i) located in an internal space(111b) of the soft magnetic material body(110) surrounding an axis, and each inner diameter protrusion(121i,123i) includes a central bending section(121c,123c) and at least two consecutive bending sections,
wherein the central bending section(121c,123c) and the at least two consecutive bending sections are bent in opposite directions, and the at least two consecutive bending sections include a first bending section(121R1,121F1,123R1,123F1) having a first curvature radius(r1,R1) and a second bending section(121R2,121F2,123R2,123F2) having a second curvature radius(r2,R2), and
wherein the second bending section(121R2,121F2,123R2,123F2) is farther away from the central bending section(121c,123c) than the first bending section(121R1,121F1,123R1,123F1), and the second curvature radius(r2,R2) is greater than the first curvature radius(r1,R1).

2. The axial flux motor stator structure of claim 1, wherein the second curvature radius(r2,R2) and the first curvature radius(r1,R1) are both greater than or equal to 1.5 times of a width(w) of each conductor wire(121, 123).

3. The axial flux motor stator structure of claim 1, wherein each conductor wire(120) further comprises a plurality of receiving portions(120r) and a plurality of outer diameter protrusions(120o), wherein the receiving portions(120r) are located in the slots(111a), and the outer diameter protrusions(120o) are exposed outside an outer diameter sidewall(111c) of the soft magnetic material body(110).

4. The axial flux motor stator structure of claim 1, wherein each inner diameter protrusion(121i,123i) includes two combinations of the first bending section(121R1,121F1,123R1,123F1) and the second bending section(121R2,121F2,123R2,123F2), and the two combinations are symmetrically arranged relative to the central bending section(121c,123c) which has a symmetry axis(121sx,123sx) passing through a central bending point of the central bending section(121c,123c) in a stator radius direction.

5. The axial flux motor stator structure of claim 4, wherein each inner diameter protrusion(121i,123i) further includes two side bending sections(121rs,121fs,123rs,123fs), and the two combinations and the two side bending sections(121rs,121fs,123rs,123fs) are symmetrically arranged relative to the symmetry axis(121sx,123sx) in the stator radius direction.

6. The axial flux motor stator structure of claim 1, wherein each inner diameter protrusion(121i,123i) further includes a third bending section(121F3, 121R3) with a third curvature radius(r3), the third bending section(121F3, 121R3) is farther away from the central bending section(121c,123c) than the second bending section(121R2,121F2,123R2,123F2), and the third curvature radius(r3) is greater than the second curvature radius(r2,R2).

7. The axial flux motor stator structure of claim 6, wherein the first curvature radius(r1,R1), the second curvature radius(r2,R2) and the third curvature radius(r3) are all greater than or equal to 1.5 times of a width(w) of each conductor wire(120,121,123).

8. The axial flux motor stator structure of claim 6, wherein each inner diameter protrusion(121i,123i) includes two combinations of the first bending section(121R1,121F1,123R1,123F1), the second bending section(121R2,121F2,123R2,123F2) and the third bending section(121F3, 121R3), and the two combinations are symmetrically arranged relative to the central bending section(121c,123c) which has a symmetry axis(121sx,123sx) passing through a central bending point of the central bending section(121c,123c) in a stator radius direction.

9. The axial flux motor stator structure of claim 6, wherein each inner diameter protrusion(121i,123i) further includes a side bending section(121rs,121fs,123rs,123fs), the side bending section(121rs,121fs,123rs,123fs) and the first bending section(121R1,121F1,123R1,123F1), the second bending section(121R2,121F2,123R2,123F2) and the third bending section(121F3, 121R3) are bent in opposite directions, and the first bending section(121R1,121F1,123R1,123F1), the second bending section(121R2,121F2,123R2,123F2) and the third bending section(121F3, 121R3) are connected between the central bending section(121c,123c) and the side bending section(121rs,121fs,123rs,123fs).

10. The axial flux motor stator structure of claim 1, wherein each inner diameter protrusion(120i) further includes a side bending section(121rs,121fs,123rs,123fs), the side bending section(121rs,121fs,123rs,123fs) and the first bending section(121R1,121F1,123R1,123F1) and the second bending section(121R2,121F2,123R2,123F2) are bent in opposite directions, and the first bending section(121R1,121F1,123R1,123F1) and the second bending section(121R2,121F2,123R2,123F2) are connected between the central bending section(121c,123c) and the side bending section(121rs,121fs,123rs,123fs).
